# EUROPEAN PATENT SPECIFICATION

(11) **EP 0 533 815 B1**
(45) Date of publication and mention of the grant of the patent: **07.02.1996**
(21) Application number: 91912025.3
(22) Date of filing: 19.06.1991
(51) Int. Cl.: A23L 1/308, A23P 1/04, A23G 3/00

(54) **FAT SUBSTITUTES AND METHOD OF PREPARING ORGANIC MICROBEADS**
FETTERSATZ UND VERFAHREN ZUR HERSTELLUNG VON ORGANISCHEN MIKROKUGELN
SUCCEDANES DE GRAISSE ET PROCEDE DE PREPARATION DE MICROBILLES ORGANIQUES

(30) Priority: 19.06.1990 GB 9013641; 25.03.1991 US 675548
(43) Date of publication of application: 31.03.1993
(73) Proprietor: MARS INCORPORATED, McLean Virginia 22101-3885 (US)
(72) Inventor: SPEIRS, Charles, Oakham, Rutland, Leicestershire LE17 HS (GB); WHITE, Karen Elizabeth, Melton Mowbray, Leicestershire LE13 0PQ (GB); IZZO, Mark Thomas, Washington, NJ 07882 (US); JEROME, Ralph Albert, Blairstown, NJ 07825 (US); NACE, Julie Ann, Hackettstown, NJ 07840 (US)
(74) Representative: Day, Jeremy John
(86) International application number: GB9100983
(87) International publication number: WO9119424

(56) References cited:
- EP-A- 0 250 623
- EP-A- 0 437 360
- WO-A-89/10068
- WO-A-89/12403
- WO-A-90/14017
- FR-A- 2 635 459
- GB-A- 2 078 483

## Description

The invention relates to the preparation of microparticulate beads of organic material and to fat substitutes, which may be prepared by the method.

It has become desirable to produce foods which have reduced fat levels. Consequently considerable technical effort has been directed towards fat substitute materials. Of particular interest are those substitutes which provide mouthfeel, texture and lubrication properties which are similar to actual lipids and thus suitable for inclusion in products as diverse as margarine, low fat spreads, ice cream, sorbets, desserts and salad dressings.

EP-A-0 340 035 describes insolubilised, microfragmented polysaccharide/protein complexes which in aqueous dispersions are suitable for utilisation as nutritious bulking, viscosity or texture control agents. Such complexes serve as fat or oil substitutes in food products such as frozen desserts, spreads, dressings, baked goods and sauces. These dispersions are made by forming an aqueous suspension of polysaccharide/protein complex at for example 5 wt% solids and subjecting the suspension to high shear. The resulting dispersion may be centrifuged to reduce the water content to for example 15-16 wt% solids.

EP-A-0 250 623 describes proteinaceous water dispersible macrocolloid particles with emulsion-like organoleptic properties. These particles are produced by coagulating whey protein by the combined effect of heat and acid pH under high shear. It is believed that they are constituted essentially by precipitated protein having a fine particle size due to the high shear.

DE-A-39 27 073 describes the preparation of microbeads of protein by cross-linking in an emulsion by means of a carbodiimide. The protein is suspended in the discontinuous phase, which may be aqueous or anhydrous, and typically constitutes about 20% of this phase. The cross linking reaction takes at least 5 hours and the cross linked protein is precipitated and the beads recovered by washing and lyophilization.

WO-A-89 12403 discloses a fat substitute of spheroidal carbohydrate particles. It can be formed by making a solution of sodium alginate and introducing this solution into a calcium ion containing solution through an ultrasonic spray nozzle or another device producing non-aggregated particles of carbohydrate having a substantially spheroidal shape and a mean diameter distribution in the range of from about 0.1 to about 2 microns with less than about 2 percent of the total particles being over 3 microns in diameter. This size distribution and shape are said to be needed to display fat-like mouthfeel characteristics.

GB-A-2 078 483 discloses an oil free, oil replacement composition comprising a protein phase made by hydrating a protein and a cellulose gum and whipping to incorporate air, mixed with an acid phase containing a gelatinized hydrated acid stable modified starch.

WO-A-90 14017, which is prior art to the present application by virtue of A 54(3) EPC, discloses a fat-like bulking agent comprising a spheroidal particulate aggregate of microcrystalline cellulose and a galactomannan gum. The aggregate is made by mixing microcrystalline cellulose with a galactomannan gum in water to form flocculates and drying the flocculates to give a powder. The powder can be reconstituted with water, in a foodstuff, to replace oil or fat.

EP-A-0 437 360, which is prior art to the present application by virtue of A54(3) EPC, discloses a fat replacement comprising microspheres, of diameter 1 to 200 µm, of a cross-linked metal alginate. The microspheres are made by atomizing an aqueous solution of an alkali metal alginate into an organic solvent containing a multivalent cation, and recovering the thus formed microspheres.

The present invention provides a method of making microparticulate beads in an energy efficient manner, which can be used for the preparation of the fat substitutes but can also for other purposes, for example microencapsulation of sensitive materials such as microorganisms. The invention also provides fat substitutes made by the method of the invention and low fat food products incorporating the fat substitute.

According to a first aspect of the present invention, a method for the preparation of microparticulate beads of gel material comprises forming an emulsion, usually a water-in-oil emulsion, and gelling one phase of the emulsion, characterised in that the disperse phase of the emulsion comprises droplets of a gellable composition and the continuous phase comprises a water-immiscible liquid, and in that the method further comprises activating gelation of the composition in the disperse phase thereby to form microparticulate gel beads, generally round beads.

The microbeads produced by this method may be of any shape but are frequently rounded and usually spherical or substantially spherical. They may be used in the emulsion medium in which they are formed, or they can be recovered, preferably by allowing the emulsion to revert to two phases either by natural sedimentation or mechanical means, for example centrifugation, and then by decanting the unwanted phase from the beads.

The gels are normally hydrous organic gels formed by gellable hydrocolloids or gelling agents in aqueous solution or colloidal dispersion. The quantity of gelling agent employed varies with the nature of the agent and the properties desired for the gel but is generally within the range of 0.1 to 20% by weight of the gellable composition or gel.

The balance of the composition may be substantially all water, but in many cases other materials, which may themselves contain water, will be included in the beads, for example meat material, vegetable proteins, egg, milk and unsaturated oils. In general the total moisture content of the beads will lie in the range of 30-99.9% by weight.

The immiscible liquid may be any liquid suitable for forming the continuous phase of the emulsion under the prevailing conditions. In most gelling situations the disperse phase will be hydrophilic and the continuous phase hydrophobic, the emulsion being of water-in-oil type. In the case of microbeads intended for food applications, e.g. as fat substitutes, the immiscible liquids are preferably food grade oils or fats for example olive or vegetable oil, milk fat or cocoa butter. Fats which are solid at room temperature must of course, be melted before emulsification takes place. The emulsion may be formed by any convenient method known in the art.

Emulsifiers may be used in the formation of the emulsion for example, mono- and di-glycerides, fractionated lecithins or any other food-grade emulsifiers.

In accordance with another aspect of this invention there is provided a fat substitute comprising, usually round, microparticulate beads characterised in that the beads are of a hydrous hydrocolloid gel and are the product of gelation of the disperse phase of an emulsion.

It appears that, in some cases at least, products of the invention having a fat-like mouthfeel comprise microparticles substantially all of which have diameters less than 50 µm, and more especially in the range 1-20 µm. This particle size range may not, however, be a prerequisite for satisfactory organoleptic characteristics, as is indicated by the somewhat different distribution described below in respect of one preferred embodiment of the invention.

Suitable gelling agents include salts of polymeric, usually macromolecular and preferably food-acceptable acids. Typically, such acids are of high molecular weight, for example, having a subunit molecular weight of about 190, and can be salts of copolymeric substances if desired. Of course, for food use, they are non-toxic.

The preferred salts are salts of polymeric acids having a cellulosic or saccharide-derived backbone with pendant carboxyl groups, for example alginates, pectates or salts of carboxymethyl cellulose. Such ionic agents can form thermally irreversible gels on reaction with polyvalent, usually divalent metal, cations. For food uses and most commercial applications, calcium ions are preferred.

In molecular terms, alginates are formed from algin which constitutes a family of unbranched binary copolymers of one-four-linked beta-D-mannuronic acid and alpha-L-guluronic acid. The copolymers vary widely in the sequence of their monomeric units depending on the organism and tissue from ewhich they are isolated. The monomers are arranged in a pattern of blocks along the chain, with homopolymeric regions interspersed with regions of alternating structure. Commercial alginates are produced mainly from Laminaria hyperborea, Macrocystis pyrifera and Ascophyllum nodosum, and, to a lesser extent, from Laminaria digitata, Laminaria japonica, Eclonia maxima, Lesonia negrescens and Sargassum sp.

The preferred amount of polymeric salt, especially alginate and/or pectate salt, in the system to be gelled is from about 0.2 to 6%, and more preferably from about 0.5% to 2% by weight of the system. The sodium or potassium salts of alginate or pectate are especially preferred.

As a sparingly soluble source of calcium ions, there may be mentioned di- or tri-calcium phosphates and calcium sulphates which, because of their low solubility, can be added liberally without greatly affecting the number of calcium ions available. The preferred source of calcium ions is calcium sulphate dihydrate. The preferred amount of added calcium as calcium salts is in the range of about 0.2% to 4%, and preferably from about 1% to 2% by weight of the system. The amount added depends upon the amount of the salt of the polymeric acid present in the system.

The amount of calcium ions in the system should preferably be sufficient to react stoichiometrically with the salt of the polymeric acid, typically an alginate or pectate salt, and generally will be higher than that amount. For calcium sulphate dihydrate the weight used is generally at least half and may be up to at least four times the weight of the alginate or pectate salt present.

The requirement for the addition of calcium ions as calcium salt may be met at least partially by the use in the gelling system of calcium rich materials such as milk.

As described in WO91/04674 a gelling system can be produced from the salt of a polymeric acid, and particularly with an alginate and/or pectate, and calcium ions with a calcium ion sequestrant which is present in the system. A sparingly soluble calcium ion source is used, and the amounts of salt, sequestrant and calcium ion are suitably chosen. If this system is allowed to stand at ambient temperature, gelling will occur very slowly. However, gelation may be substantially instantaneous when the system is heated above a threshold temperature. The gelling time can, however, be adjusted by selection of the components of the system and the amounts in which they are present.

The sequestrant is preferably a "thermolabile sequestrant" that is a sequestrant that will strongly sequester calcium ions at temperatures below a threshold temperature, but which at least partially loses its sequestering power above that temperature to release calcium ions rapidly to make them available to interact with the alginate or pectate to cause gelation.

Examples of sequestrants are sequestrants with polyvalent anions, especially phosphates. Specific examples include sodium or potassium pyrophosphates, especially tetrapotassium pyrophosphate.

The total amount of sequestrant present in the system should be at least that amount required to sequester substantially all the available calcium ions in the system prior to heating to above the threshold temperature. Certainly, the amount of sequestrant used will depend upon the sequestering activity of any given sequestrant. The higher the sequestering activity, the less the amount of sequestrant that is used.

For example, in an aqueous system using calcium sulphate dihydrate as the calcium ion source, and sodium or potassium pyrophosphate as the sequestrant, the sequestrant may be present in an amount within the range of about 5 to 70%, preferably from about 10 to 40%, and especially about 30% by weight, calculated on the weight of calcium sulphate dihydrate.

The gelling system of WO91/04674 can be used in the practice of the invention and has the advantage that because gelling may be slow at room temperature, the emulsion can be formed at low temperature and then the gellation reaction triggered by heating.

The preferred method of the invention thus involves forming an emulsion in which the disperse phase comprises beads of alginate or pectate solution calcium ion and sequestrant. However, it is also possible to form an emulsion containing the alginate or pectate and to add a calcium ion source, which could for example be calcium chloride to this emulsion.

The variable parameters of the alginate and pectate gelling systems thus include the concentration and type of alginate and/or pectate, sequestrant and calcium source as well as the presence of other ions and the pH. These variables can be modified to give a hot or a cold (relative to ambient) gelation. Gelling system threshold temperatures in the range 4°C - 130°C can be produced by suitable selection of the variables.

Table 1 shows the sort of gel delay effect that can be achieved by varying sequestrant level while keeping the alginate and CaSO₄.2H₂0 levels constant and the temperature constant. The sequestrant is tetrapotassium pyrophosphate-TKPP and the temperature at room temperature.

**Table 1**

| **Gelation Time Vs. Sequestrant Levels** | |
|---|---|
| % TKPP | Approximate Gelation Time |
| 0.2% | 10 minutes |
| 0.3% | 22 minutes |
| 0.5% | 34 minutes |
| 0.75% | 67 minutes |
| 1.0% | 135+ minutes |

Alginate and pectate gelled microbeads have the advantage of being heat stable, but the process is equally applicable to thermally reversible systems. For example, microbeads can be prepared using agar, carrageenan, gelatin or gellan or combinations of macromolecular substances such as xanthan-carob gum, carrageenan-carob gum, or agar-tara gum, which can form heat reversible gelled beads upon activation. The key to preparing these microparticulate beads is to produce a very fine emulsion of the bead former (in the unset form) in an immiscible liquid. The gelation of the microparticulate beads then proceeds upon activation. In the case of thermally reversible systems it is convenient to prepare a hot emulsion system which can then be cooled to below the setting temperature of the gel and thereby activate the gelation process.

In a further embodiment of the invention the gellable material may be heat coagulable proteins, for example egg white, blood plasma, soya isolate, vital wheat gluten and whey protein.

Before the microparticulate beads are fully set, the beads must be kept separate otherwise there may be a tendency for the beads to aggregate and merge together. The emulsion must either be kept moving until set, be dilute enough to prevent the beads coming into contact with each other or the emulsion can be stabilised. Once set, the beads can be optionally removed from the immiscible fluid in which they are prepared or the beads can be prepared in a liquid appropriate for the product they are to be incorporated into and alleviate the need for separation.

If the typical gel structure of the microbeads of this invention is not required, it is possible to dry the beads after their preparation and before final use. The advantages of the present method of preparing microparticles are not lost thereby.

The microparticulate beads can be used for a wide range of applications for example as food additives with differing mouth feel sensations and with incorporated flavouring and colouring agents and nutrients by replacement of a portion of the aqueous phase with an appropriate material.

Reduced fat food products can be produced by replacing at least a part of a fat containing ingredient or ingredients by the fat substitute of the invention.

Products which can advantageously exploit the fat substitute characteristics include, but are not limited to, milk products, ice cream, pudding, cheesecake, chocolate, fondues, dips, salad dressings, mousse, frosting and icing, confections, sauces and gravies, desserts, mayonnaise, etc.

Small amounts of the fat substitutes according to the invention can be added to chocolate as a means of adding water to the chocolate to produce a heat resistant chocolate.

Another important application of the beads produced in accordance with the invention is in the encapsulation of drugs (for example to allow delayed drug release) or of microorganisms or enzymes or indeed anything else in a gel matrix. Gelling agents such as alginates have previously been used in encapsulation by extending a fluid gellable composition containing the material to be encapsulated through a hollow needle or fine orifice. The resulting beads are relatively large, often up to 0.1 or 0.2 mm in diameter. The very small diameter and relatively uniform size distribution of the beads of the present invention confer particular advantages in respect of the transport of nutrient materials and gases, such as oxygen, through the beads. These are important factors for the longevity of encapsulated microorganisms. Moreover, the rapid gelation achieved with the method of the invention at very small particle sizes minimises any harmful effect of the technique on microorganisms or other sensitive encapsulated material.

The beads can also simply serve as a method of packaging their contents in very small, uniform spherical beads.

In a particularly preferred technique according to the invention, the procedure for preparation of a fat substitute alginate or pectate is as follows:
1. An aqueous solution of alginate (especially sodium alginate) and/or pectate and a calcium sequestrant, specifically tetrasodium or tetrapotassium pyrophosphate, is prepared. The levels of alginate and/or pectate used are typically from about 0.4 to 12%, and preferably from about 1 to 4%. The levels of sequestrant used are in the range from about 0-2%, and preferably from about 0.4-1%.
   The sequestrants serve to soften the water as well as to slow down the reaction between the calcium cations and the alginate. Sequestrant choice is dependent on the pH range used and the effect the sequestrant has on the flavor of the final product. The amounts used are also dependent upon the delay time desired before gelation, as discussed above.
2. A dispersion of an insoluble calcium source, preferably calcium sulphate dihydrate, is prepared. The levels of calcium sulphate dihydrate used are from about 0.4-8%, and preferably from about 2-4%.
3. An oil and emulsifier mixture is also prepared. The oil may be any type of edible oil such as corn, soybean, canola, or olive oil, anhydrous milk fat, cocoa butter, rice bran oil, fish oil, etc. The emulsifier can be chosen from any of the food approved emulsifiers such as mono and di-glycerides, acetylated monoglycerides, glycerol esters, lecithins, polyglycerol esters, propylene glycol esters, sorbitan esters, sodium citrates and lactates, and blends of the above. In addition materials with natural emulsifying ability such as egg, soy, milk or meat proteins may be used. The emulsifier levels can range from about 0-10% of the weight of the oil, depending on the emulsifier used and the amount of the aqueous phase which will be added to the oil in later steps.
4. The solutions prepared in steps 1 and 2 are mixed under low shear in approximately a 1:1 ratio to obtain an aqueous liquid containing alginate, calcium sulfate and sequestrant. This solution is prepared at room temperature or below to slow the solubilisation of calcium and to allow the sequestrant to fully bind all available calcium ions. Depending on the levels of sequestrant, calcium, and alginate used, as well as the amount of mixing employed, this mixture will remain a liquid for about 5 minutes to 4 hours if it is not heated.
5. The mixture produced in step 4 is then added to the oil-emulsifier blend prepared in step 3 and emulsified to produce a water-in-oil emulsion. The solution of alginate and the calcium slurry may be refrigerated upon preparation to reduce temperature rise during homogenisation. After solutions reach refrigeration temperatures, they may be mixed, combined with the oil and homogenised. The temperature of the oil/emulsifier mixture will necessarily vary depending on the melting point of the oil used. For example, a corn oil/emulsifier mix may be used at room temperature, while a cocoa butter/emulsifier mix is used at a temperature above the melting point of the cocoa butter. Higher oil/emulsifier temperatures will result in faster reaction rates when the aqueous mixture contacts the warmer oil phase. To prevent premature gelation of the aqueous phase, high sequestrant/lower calcium levels are generally needed when fats are used which must be heated above room temperature to become liquids.
   The ratio of oil to water is only dictated by the allowable limits of emulsion technology, but is generally in the range from about 50% oil: 50% water to about 90% oil: 10% water. Preferably, the range is from about 70% oil: 30% water to about 90% oil: 10% water.
   The preliminary water-in-oil emulsion may be formed in any type of high shear mixer, while the final emulsion can be formed in any type of homogeniser. A piston type two stage homogeniser can be used with pressures varying from about 1000-6000 PSI (7000 to 42000 kPa) depending on the oil:water ratio, the type and level of emulsifier employed and the particle size desired. Changes in pressure during homogenisation can vary particle size and shape.
6. The emulsion is then heated to about 50° to 100°C to trigger the heat setting of the calcium alginate gel, thus producing the particles of alginate gel product. The actual temperature of gel formation will depend on the concentrations of alginate/pectate, calcium, and sequestrant, as discussed above.
   Alternatively, the heating of the emulsion can occur during homogenisation either by heating the homogenizing device itself or continually recirculating the emulsion through the homogeniser to cause a frictional increase in temperature. This method may be used to produce the gelled particles under shear, resulting in particles of various shapes and sizes (e.g. rods, cones, spheres).
7. The gel product is then recovered by centrifugation at rates ranging from about 2,000-11,000 G. Generally, a small amount of residual fat, for example about 2%, will remain with the alginate. The amount of residual fat depends upon the centrifugation speed. Lower rates will result in alginate gel having more fat associated with its surface, as well as higher moisture, while higher rates will result in lower amounts of fat associated with the alginate surface, as well as lower moisture and a firmer texture.

The product recovered after centrifugation at 11,000 G for 5 minutes has a white, opaque appearance and a texture similar to shortening. It is very creamy and fat-like. Similarly, the product has a very smooth mouthfeel. For all these reasons, among others, the product is an excellent fat substitute.

A light microscope provides one view of the fat substitute produced. However, since the alginate gels are predominantly water (as much as about 90-93%) they are difficult to view with a light microscope.

Below is a table showing what is believed to be the mean particle size and distribution of typical alginate microparticles produced by this preferred technique.

| **Size (µm)** | **Approximate Percent** |
|---|---|
| 0-30 | 7.3 |
| 31-60 | 27.4 |
| 61-90 | 29.0 |
| > 90 | 36.3 |

The range of particle size in this case is believed to be about 15-300 µm and the mean particle size is believed to be about 96 µm. Alginate products ranging from about 2-30% fat may be obtained, depending on the emulsifier and centrifuge conditions employed.

The formation of microparticulate beads according to the present invention will be further explained by way of Example 1 and 5. Details of some of the applications of the beads are given in Examples 2 to 4 and 6 to 12.

### EXAMPLE 1

### The Material

1000g of a 2% sodium alginate solution (e.g. Protanal SF-40) in water was prepared. To this was added 10 ml of a 50% solution of tetrapotassium pyrophosphate. This was Blend A. 1000g of a 2% dispersion of calcium sulphate dihydrate was then prepared. This was Blend B.

Blends A and B were added together and thoroughly mixed, for example using a Silverson mixer. 3500g of vegetable oil was added to the mixture with further mixing. Finally the mixture was passed through a pressure homogeniser (e.g. APV - Gaulin). One pass through the homogeniser gave emulsion particles in the size range 5 - 10µm. The particles were allowed to set while being stirred gently. In an alternative procedure setting was speeded up by heating the mixture to 60°C for example by microwaving. The particles settled to the bottom of the oil under gravity.

After the oil was removed by decanting, the microbeads had a creamy feel, appearance and taste. The beads were subsequently washed with water and solvent to remove residual oil, and the microparticles were found to have retained their pseudolipid organoleptic properties.

### EXAMPLE 2

### Salad Dressing

A reduced calorie, reduced fat, viscous dressing was prepared using the alginate microparticles described in Example 1.

| INGREDIENT | WEIGHT % |
|---|---|
| Water | 16 |
| Olive Oil | 40 |
| Alginate microbeads | 31 |
| Eggs | 10 |
| Vinegar | 3 |

The water and eggs were thoroughly mixed in a food processor before adding the oil under maximum shear. The vinegar was then blended into the mixture under conditions of maximum shear. The mixing conditions were slowed and the alginate microbeads were gently introduced. The premixed material was then introduced into the throat of a conventional colloid mill. A mayonnaise type product was formed with approximately half the fat content of a conventional mayonnaise.

### EXAMPLE 3

### Fat Reduced Milk Product

Using the fat substitute prepared in Example 1.

| INGREDIENT | WEIGHT % |
|---|---|
| Skimmed milk | 85 |
| Eggs | 5 |
| Alginate microparticles | 10 |

The eggs were blended with the skimmed milk using a Silverson food processor. The alginate microparticles were then blended in using the emulsion head of a Silverson mixer. The blended material was fed into a pressure homogeniser. Two passes through the homogeniser gave a creamy milk drink with a negligible dairy fat content.

### EXAMPLE 4

### Malt Flavoured Milk Drink

This example is a variation of Example 3 but with a malt flavour. This was provided by introducing 10% malt into the aqueous phase during the manufacture of Blend A as described in example 1.

### EXAMPLE 5

### Preparation of Beads which have a Low Melting Point

4% Gelatin in water at 60°C was added to vegetable oil at 60°C using a Silverson mixer. The mixture was then passed through a high pressure homogeniser with the temperature maintained at about 60°C. After homogenisation, the emulsion was allowed to cool to ambient temperature with gentle stirring. The gelatin beads set on cooling. The microparticulate beads could then optionally be separated from the oil.

The beads have the low melting point of the gelatin, and this makes them suitable to be incorporated into products requiring a melt-in-the mouth texture.

### EXAMPLE 6

### Ice Cream

The following examples illustrate the use of the invention in preparing a reduced fat ice cream product in comparison with a conventional ice cream.

### (a) Conventional Ice Cream:

| INGREDIENT | WEIGHT (Kg) |
|---|---|
| Cream | 0.590 |
| Skimmed milk powder | 0.100 |
| Skimmed milk | 1.170 |
| Granulated sugar | 0.270 |
| Corn syrup | 0.090 |
| Stabiliser & Emulsifier | 0.011 |

The dry ingredients (i.e. sugar and skimmed milk powder) are mixed together. The liquid milk, cream and corn syrup are mixed together in a second container. The dry ingredients are then added to the wet mixture while mixing using (e.g.) a high speed Silverson mixture till a smooth mix is obtained. The stabiliser and emulsifier is now added into the vortex and mixed through. The mixture is now heated to about 80°C for 30 minutes. The mixture is now homogenised by a double pass through an ice cream homogeniser (e.g. APV Gaulin) at 3.45 MNM⁻² (500 psi) for the first pass and subsequently at 17.24 MNM⁻² (2500psi) for the second pass. The mixture is now allowed to age for upwards of 12 hours in the freezer.

This process gives an ice cream containing 9.969% milk fat, 10.527% non-fat milk solids, 16.443% sugars, 0.500% stabilisers and emulsifiers and a total of 37.541% solids.

### (b) Reduced Fat Ice Cream Product

| INGREDIENT | WEIGHT (Kg) |
|---|---|
| Cream | 0.233 |
| Alginate microbeads | 0.135 |
| Skimmed milk powder | 1.395 |
| Granulated sugar | 0.270 |
| Corn syrup | 0.090 |
| Emulsifier & Stabiliser | 0.011 |

The dry ingredients are blended as described above. The skimmed milk, corn syrup and alginate microbeads are blended in a second container. The dry ingredients are subsequently mixed with the contents of the second container and blended as described above in (a). The remainder of the process is as described in (a).

This process gives a reduced fat ice product containing 3.930% milk fat, 10.527% milk solids non-fat, 16.443% sugars, 0.500% stabiliser and emulsifier and 31.502% total solids. For the purpose of this calculation the alginate microbeads are considered to have a negligible solids content and replace cream as if milk fat.

In both examples the emulsifier and stabiliser is a proprietary food grade blend sold for the purpose of ice cream manufacture.

In the following further Examples, alginate microbeads prepared in accordance with the preferred technique described above are used in a variety of food products.

### EXAMPLE 7

### Ice Cream

| Ingredient | Percent | Percent of Mix |
|---|---|---|
| Alginate microbeads | 30. 00 | |
| Sucrose | 0.75 | |
| Sweetened Condensed Skim Milk | 36.30 | |
| Skim Milk | 32.40 | |
| Stabilizer/Emulsifier Blend | 0.55 | |
| Vanilla 4X | - | 0.25 |
| Natural Cream Flavour | - | 0.30 |

The mix was prepared by blending the skim milk and sweetened condensed skim milk. The alginate was added to the skim milk and dispersed under high shear. A dry blend of sucrose and stabiliser/emulsifier was prepared and slowly added under high shear to the vortex of the mixture. The mix was heated to 165°F (74°C) in a double boiler, and passed through a two-stage homogeniser at 2500 psi (17.2 MN/m²). The mix was aged overnight at 40°F (4°C). Vanilla and cream flavor were added, and the mix was frozen to 22°F (-6°C) in a Taylor Batch Ice Cream Freezer. The final product was hardened and tempered for evaluation.

The final product thus produced was a creamy, low fat frozen dessert with a mouth coat and melt which approached that of standard ice cream.

One advantage of the instant invention over typical low fat ice creams is that the high water content in typical low fat ice creams leads to iciness with age. The use of the alginate microbead product stabilises the formulation against iciness and allows for maintenance of a creamy mouth feel with age. It is believed that the water is immobilised in the gel.

### EXAMPLE 8

### Skim Milk

Alginate microbeads were incorporated into skim milk at various levels to demonstrate their functionality in a simple system. The alginate microbeads were added to skim milk at 4%, 10%, 20%, 30% and 40%. A high shear mixer was used to disperse the alginate. The alginate-skim milk mixture was then homogenised with a two-stage homogeniser at 6000 psi (41.4MN/m²). Viscosity measurements were taken and recorded. See Table 2.

**TABLE 2**

| SAMPLE | * VISCOMETER READING | RPM | SPINDLE NO. | CPS |
|---|---|---|---|---|
| Skim milk | 1.5 | 20 | 1 | 7.5 |
| 4% algin | 2.0 | 20 | 1 | 10.0 |
| 10% algin | 3.3 | 20 | 1 | 16.5 |
| 20% algin | 7.23 | 20 | 1 | 36.5 |
| 30% algin | 23.27 | 20 | 3 | 116.3 |
| 40% algin | 51.00 | 20 | 3 | 225.0 |

| | | | | |
|---|---|---|---|---|
| * Brookfield Viscometer model RV samples @ 40°F (4.4°C). | | | | |

### EXAMPLE 9

### Cheese Cake Filling

This example illustrates the use of alginate microbeads to reduce the fat level in a cheese cake filling. The cheese cake was prepared having the following composition:

| INGREDIENT | PERCENT |
|---|---|
| (Mix A) | |
| Cream cheese | 45.5 |
| Alginate beads | 25.00 |
| Glycerin | 2.5 |

| (Mix B) | |
|---|---|
| Sucrose | 23.0 |
| Starch | 2.6 |
| Emulsifier | 0.2 |
| Cheese Cake Flavor | 0.2 |
| Salt | 0.3 |
| B-Carotene | 0.01 |
| Vanilla | 0.7 |

The cheese cake was prepared by creaming the ingredients of mix A using a Hobart mixer. Mix B was blended together and slowly added to mix A until smooth. The mixture was then heated for approximately 9 minutes in a microwave oven until a temperature of 190°C was obtained. The cheese cake filling was held at room temperature for 5 minutes allowing the starch to gelatinise. The product was cooled to 100°C in a water bath, followed by the addition of the vanilla. It was then refrigerated for later sampling.

The final product thus produced was a reduced fat cheese cake filling with the positive attributes of an increased texture and mouth coat.

### EXAMPLE 10

### Cheese Cake Filling

Example 9 was repeated except that the alginate formed 50% of the mixture, with the cream cheese correspondingly reduced. The final product thus produced was a much lower fat cheese cake filling with the positive attributes of an increased texture and mouth coat; and a slower melt.

### EXAMPLE 11

### Chocolate

This example illustrates the use of the alginate microbeads as a fat replacer in chocolate or to increase the heat stability of chocolate. Following tempering, alginate was added to chocolate at 33% to formulate a low-fat chocolate snack. The final product thus produced was higher in viscosity and resembled that of a fudge-type product.

A lower level, 2%, was added to chocolate as a means of incorporating water into the chocolate system. The heat stability of the chocolate sample was greatly increased, without increasing the viscosity.

### EXAMPLE 12

### Mayonnaise

This example illustrates a mayonnaise with fat reduced through the incorporation of alginate. The reduced fat mayonnaise was prepared having the following composition:

| **INGREDIENT** | **PERCENT** |
|---|---|
| Whole egg | 11.04 |
| Salt | 1.04 |
| Sugar | 1.43 |
| Mustard | 0.43 |
| Vinegar | 9.93 |
| Alginate Microbeads | 38.07 |
| Oil | 38.07 |

The mayonnaise was prepared by mixing the egg, salt, sugar, alginate, and dry mustard. Half the vinegar was added to the egg mixture, and stirred well to dissolve the sugar and disperse the alginate. Using a lightening mixer at speed 2000, half the oil was added and mixed for 3 minutes. The remaining vinegar was added and mixed at speed 1300 for 30 second. The remaining oil was then added and mixed at 2000 for 3 minutes. The final product was refrigerated for later evaluation.

The final product thus produced was a creamy mayonnaise with 50% less fat than regular mayonnaise.

## Claims

1. A fat substitute comprising microparticulate beads characterised in that the beads are of a hydrous hydrocolloid gel and are the product of gelation of the disperse phase of an emulsion.

2. A fat substitute according to claim 1 wherein the beads comprise from 0.1 to 20% by weight gelling agent.

3. A fat substitute according to claim 1 or claim 2 wherein the beads contain the reaction product of a gellable ionic polysaccharide and a physiologically tolerable metal capable of causing gelation of the polysaccharide.

4. A fat substitute according to claim 3 wherein the ionic polysaccharide comprises at least one of alginate, pectate and salts of carboxymethyl cellulose.

5. A fat substitute according to claim 4 wherein the polysaccharide is sodium or potassium alginate or pectate.

6. A fat substitute according to any of claims 3 to 5 wherein the metal ions are calcium ions.

7. A fat substitute according to claim 6 wherein the beads also contain a calcium ion sequestrant.

8. A fat substitute according to any one of claims 3 to 7 wherein the quantity of ionic polysaccharide is from 0.2% to 6.0% by weight of the beads.

9. A fat substitute according to claim 1 or claim 2 wherein the beads contain at least one of agar, carrageenan, gelatin, gellan, xanthan-carob gum and agar-tara gum as gelling agent.

10. A fat substitute according to claim 1 or 2 wherein the microparticulate beads contain a heat set protein gel.

11. A fat substitute according to claim 10 wherein the protein comprises at least one of egg white, blood plasma, soya isolate vital wheat gluten and whey protein.

12. A fat substitute according to any preceding claim wherein the beads have a moisture content of from 30 to 99.9% by weight.

13. A fat substitute according to any preceding claim wherein the beads also contain one or more of flavouring agents.

14. A food product of a type containing at least one fat-containing ingredient wherein a fat substitute according to any one of claims 1 to 13 is incorporated in place of at least a part of said ingredient or ingredients.

15. A food product according to claim 14 wherein said fat containing ingredient is a dairy product.

16. A food product according to claim 14 which is a chocolate product.

17. A heat resistant chocolate comprising chocolate in which a small percentage of additional water has been incorporated by adding a small amount of a fat substitute according to any one of claims 1 to 13 to the other ingredients.

18. A method for the preparation of microparticulate beads of gel material which comprises forming an emulsion and gelling one phase of the emulsion, characterised in that the disperse phase of the emulsion comprises droplets of gellable composition and the continuous phase comprises a water immiscible liquid, and in that the method further comprises activating gelation of the composition in the disperse phase thereby to form microparticulate gel beads.

19. A method according to claim 18 in which the gellable composition is prepared from a gelling agent in an amount of 0.1 to 20% by weight of the composition and has a moisture content of 30 to 99.9% by weight.

20. A method according to claim 18 or 19 which comprises forming an emulsion which contains a gellable ionic polysaccharide and metal ions capable of causing gelation of the polysaccharide in an aqueous disperse phase.

21. A method according to claim 20 wherein the ionic polysaccharide is at least one of alginate, pectate and salts of carboxymethyl cellulose and the metal ions are calcium ions.

22. A method according to claim 21 wherein the calcium ions are in the form of calcium sulphate dihydrate.

23. A method according to claim 21 or 22 wherein the quantity of calcium ions is in the range of 0.2% to 4.0% of the weight of the gellable composition.

24. A method according to any one of claims 21 to 23 wherein the composition also contains a calcium ion sequestrant.

25. A method according to claim 24, wherein gelation is accelerated or initiated by heating.

26. A method according to claim 18 or 19 which comprises forming an emulsion which contains a thermoreversible gellable composition and activating gelation by cooling.

27. A method according to claim 18 or 19 which comprises forming an emulsion which contains a heat settable protein, and activating gelation by heating.

28. A method according to any of claims 18 to 27 wherein the disperse phase is emulsified in a water-immiscible oil.

29. A method according to any of claims 18 to 28 wherein microorganisms or other material are microencapsulated in a matrix of the gel.

## Patentansprüche

1. Ein Fettersatzstoff, der Perlen in Mikroteilchengröße umfaßt, dadurch gekennzeichnet, daß die Perlen aus einem wasserhaltigen Hydrokolloidgel bestehen und das Produkt der Gelierung der dispersen Phase einer Emulsion sind.

2. Ein Fettersatzstoff nach Anspruch 1, wobei die Perlen von 0,1 bis 20 Gew.-% Geliermittel umfassen.

3. Ein Fettersatzstoff nach Anspruch 1 oder Anspruch 2, wobei die Perlen das Reaktionsprodukt eines gelierbaren ionischen Polysaccharids und eines physiologisch tolerierbaren Metalls, das die Gelierung des Polysaccharids bewirken kann, enthalten.

4. Ein Fettersatzstoff nach Anspruch 3, wobei das ionische Polysaccharid wenigstens eines aus Alginat, Pektat und Salzen von Carboxymethylcellulose umfaßt.

5. Ein Fettersatzstoff nach Anspruch 4, wobei das Polysaccharid Natrium- oder Kaliumaiginat oder -pektat ist.

6. Ein Fettersatzstoff nach einem der Ansprüche 3 bis 5, wobei die Metall-Ionen Calcium-Ionen sind.

7. Ein Fettersatzstoff nach Anspruch 6, wobei die Perlen auch ein Calcium-Ionen-Maskierungsmittel enthalten.

8. Ein Fettersatzstoff nach einem der Ansprüche 3 bis 7, wobei die Menge an ionischem Polysaccharid von 0,2% bis 6,0%, bezogen auf das Gewicht der Perlen, beträgt.

9. Ein Fettersatzstoff nach Anspruch 1 oder Anspruch 2, wobei die Perlen wenigstens eines aus Agar, Carrageenan, Gelatine, Gellan, Xanthan-Carob-Gummi und Agar-Tara-Gummi als Gelierungsmittel enthalten.

10. Ein Fettersatzstoff nach Anspruch 1 oder 2, wobei die Perlen in Mikroteilchengröße ein durch Hitze ausgehärtetes Proteingel enthalten.

11. Ein Fettersatzstoff nach Anspruch 10, wobei das Protein Wenigstens eines aus Eiweiß, Blutplasma, Sojaisolat, Vitalweizenkleber und Molkeprotein umfaßt.

12. Ein Fettersatzstoff nach einem vorangehenden Anspruch, wobei die Perlen eine Feuchtigkeitsgehalt von 30 bis 99,9 Gew.-% aufweisen.

13. Ein Fettersatzstoff nach einem vorangehenden Anspruch, wobei die Perlen auch einen oder mehrere Geschmacks-/Geruchsstoffe enthalten.

14. Ein Nahrungsmittelprodukt eines Typs, der wenigstens einen fetthaltigen Inhaltsstoff enthält, wobei ein Fettersatzstoff nach einem der Ansprüche 1 bis 13 anstelle wenigstens eines Teils von besagtem Inhaltsstoff oder besagten Inhaltsstoffen eingearbeitet ist.

15. Ein Nahrungsmittelprodukt nach Anspruch 14, wobei besagter fetthaltiger Inhaltsstoff ein Milchprodukt ist.

16. Ein Nahrungsmittelprodukt nach Anspruch 14, welches ein Schokoladenprodukt ist.

17. Eine wärmebeständige Schokolade, die Schokolade umfaßt, in der ein geringer Prozentanteil an zusätzlichem Wasser durch Zugabe einer geringen Menge eines Fettersatzstoffes nach einem der Ansprüche 1 bis 13 zu den anderen Inhaltsstoffen eingearbeitet worden ist.

18. Ein Verfahren zur Herstellung von Perlen in Mikroteilchengröße aus Gelmaterial, welches die Bildung einer Emulsion und die Gelierung einer Phase der Emulsion umfaßt, dadurch gekennzeichnet, daß die disperse Phase der Emulsion Tröpfchen aus gelierbarer Zusammensetzung umfaßt und die kontinuierliche Phase eine wasserunmischbare Flüssigkeit umfaßt und daß das Verfahren außerdem das Aktivieren der Gelierung der Zusammensetzung in der dispersen Phase umfaßt, um dadurch Gelperlen in Mikroteilchengröße zu bilden.

19. Ein Verfahren nach Anspruch 18, in dem die gelierbare Zusammensetzung aus einem Gelierungsmittel in einer Menge von 0,1 bis 20%, bezogen auf das Gewicht der Zusammensetzung, hergestellt wird und einen Feuchtigkeitsgehalt von 30 bis 99,9 Gew.-% aufweist.

20. Ein Verfahren nach Anspruch 18 oder 19, welches die Bildung einer Emulsion umfaßt, die ein gelierbares ionisches Polysaccharid und Metall-Ionen, die die Gelierung des Polysaccharids in einer wäßrigen dispersen Phase bewirken können, enthält.

21. Ein Verfahren nach Anspruch 20, wobei das ionische Polysaccharid wenigstens eines aus Alginat, Pektat und Salzen von Carboxymethylcellulose ist und die Metall-Ionen Calcium-Ionen sind.

22. Ein Verfahren nach Anspruch 21, wobei die Calcium-Ionen in der Form von Calciumsulfat-Dihydrat vorliegen.

23. Ein Verfahren nach Anspruch 21 oder 22, wobei die Menge an Calcium-Ionen im Bereich von 0,2% bis 4,0%, bezogen auf das Gewicht der gelierbaren Zusammensetzung, beträgt.

24. Ein Verfahren nach einem der Ansprüche 21 bis 23, wobei die Zusammensetzung auch ein Calcium-Ionen-Maskierungsmittel enthält.

25. Ein Verfahren nach Anspruch 24, wobei die Gelierung durch Erhitzen beschleunigt oder eingeleitet wird.

26. Ein Verfahren nach Anspruch 18 oder 19, welches die Bildung einer Emulsion, die eine thermoreversible gelierbare Zusammensetzung enthält, und Aktivieren der Gelierung durch Abkühlung umfaßt.

27. Ein Verfahren nach Anspruch 18 oder 19, welches die Bildung einer Emulsion, die ein durch Hitze aushärtbares Protein enthält, und die Aktivierung der Gelierung durch Erhitzen umfaßt.

28. Ein Verfahren nach einem der Ansprüche 18 bis 27, wobei die disperse Phase in einem wasserunmischbaren Öl emulgiert wird.

29. Ein Verfahren nach einem der Ansprüche 18 bis 28, wobei Mikroorganismen oder anderes Material in einer Matrix des Gels mikroverkapselt werden.

## Revendications

1. Substitut de graisse comprenant des perles microparticulaires, caractérisé en ce que les perles sont en un gel hydrocolloïde aqueux et sont le produit de la gélification de la phase dispersée d'une émulsion.

2. Substitut de graisse selon la revendication 1, dans lequel les perles comprennent de 0,1 à 20% en poids d'un agent gélifiant.

3. Substitut de graisse selon la revendication 1 ou 2, dans lequel les perles contiennent le produit de réaction d'un polysaccharide ionique gélifiable et d'un métal physiologiquement tolérable capable de provoquer la gélification du polysaccharide.

4. Substitut de graisse selon la revendication 3, dans lequel le polysaccharide ionique comprend parmi les alginate, pectate et les sels de carboxyméthylcellulose au moins un de ceux-là.

5. Substitut de graisse selon la revendication 4, dans lequel le polysaccharide est l'alginate ou le pectate de sodium ou de potassium.

6. Substitut de graisse selon l'une quelconque des revendications 3 à 5, dans lequel les ions métalliques sont les ions calcium.

7. Substitut de graisse selon la revendication 6, dans lequel les perles contiennent également un séquestrant des ions calcium.

8. Substitut de graisse selon l'une quelconque des revendications 3 à 7, dans lequel la quantité de polysaccharide ionique est de 0,2 à 6,0% en poids des perles.

9. Substitut de graisse selon la revendication 1 ou 2, dans lequel les perles contiennent parmi les agar-agar, carragheenane, gélatine, gellane, gomme de xanthane-caroube et gomme agar-tara au mains un de ceux-là comme agent gélifiant.

10. Substitut de graisse selon la revendication 1 ou 2, dans lequel les perles microparticulaires contiennent un gel de protéine qu'on fait prendre par la chaleur.

11. Substitut de graisse selon la revendication 10, dans lequel la protéine contient parmi les blanc d'oeuf, plasma sanguin, produit isolé du soja, gluten de blé vital et protéine de petit lait au moins un de ceux-là.

12. Substitut de graisse selon l'une quelconque des revendications précédentes, dans lequel les perles ont une teneur en humidité de 30 à 99,9% en poids.

13. Substitut de graisse selon l'une quelconque des revendications précédentes, dans lequel les perles contiennent également un (ou plusieurs) agent d'aromatisation.

14. Produit alimentaire du type contenant au moins un ingrédient contenant une graisse, dans lequel on incorpore un substitut de graisse selon l'une quelconque des revendications 1 à 13 à la place d'au moins une partie dudit ingrédient ou desdits ingrédients.

15. Produit selon la revendication 14, dans lequel ledit ingrédient contenant la graisse est un produit laitier.

16. Produit alimentaire selon la revendication 14, qui est un produit chocolaté.

17. Chocolat résistant à la chaleur comprenant un chocolat, dans lequel on incorpore un petit pourcentage d'eau supplémentaire en ajoutant une petite quantité d'un substitut de graisse selon l'une quelconque des revendications 1 à 13 aux autres ingrédients.

18. Procédé de préparation de perles microparticulaires d'une matière de gel qui consiste à former une émulsion et à gélifier une phase de l'émulsion, caractérisé en ce que la phase dispersée de l'émulsion comprend des gouttelettes de composition gélifiable et la phase continue comprend un liquide non miscible avec l'eau, et en ce que le procédé consiste en plus à activer la gélification de la composition dans la phase dispersée pour former ainsi les perles de gel microparticulaires.

19. Procédé selon la revendication 18, dans lequel la composition gélifiable est préparée à partir d'un agent gélifiant en une quantité de 0.1 à 20% en poids de la composition et a une teneur en humidité de 30 à 99,9% en poids.

20. Procédé selon la revendication 18 ou 19, qui consiste à former une émulsion qui contient un polysaccharide ionique gélifiable et des ions métalliques capables de provoquer la gélification du polysaccharide dans une phase dispersée aqueuse.

21. Procédé selon la revendication dans lequel le polysaccharide est parmi les alginate, pectate et sels de carboxyméthylcellulose au moins un de ceux-là et les ions métalliques sont les ions calcium.

22. Procédé selon la revendication 21, dans lequel les ions calcium sont sous forme de sulfate de calcium dihydraté.

23. Procédé selon la revendication 21 ou 22, dans lequel la quantité d'ions calcium se situe dans la gamme de 0,2 à 4,0% en poids de la composition gélifiable.

24. Procédé selon l'une quelconque des revendications 21 à 23, dans lequel la composition contient également un séquestrant des ions calcium.

25. Procédé selon la revendication 24, dans lequel la gélification est accélérée ou amorcée par un chauffage.

26. Procédé selon la revendication 18 ou 19, qui comprend la formation d'une émulsion qui contient une composition gélifiable thermoréversible et l'activation de la gélification par un refroidissement.

27. Procédé selon la revendication 18 ou 19, qui comprend la formation d'une émulsion qui contient une protéine qu'on fait prendre par la chaleur et l'activation de la gélification par un chauffage.

28. Procédé selon l'une quelconque des revendications 18 à 27, dans lequel la phase dispersée est émulsifiée dans une huile non miscible avec l'eau.

29. Procédé selon l'une quelconque des revendications 18 à 28, dans lequel sont microencapsulés des micro-organismes ou autres matières dans une matrice de gel.
